# EUROPEAN PATENT SPECIFICATION

(11) **EP 4 382 629 B1**
(45) Date of publication and mention of the grant of the patent: **11.11.2026**
(21) Application number: 23756489.3
(22) Date of filing: 20.02.2023
(51) Int. Cl.: C22C 38/00, B22F 3/24, B22F 10/25, B33Y 10/00, B33Y 70/00, B33Y 80/00, C22C 38/36, C23C 26/00, B22F 10/62, C22C 33/02, C22C 38/02, C22C 38/04, C22C 38/22, C22C 38/24, C22C 38/30, C23C 28/04

(54) **FE-BASED ALLOY, ALLOY MEMBER, PRODUCT, AND METHOD FOR MANUFACTURING THE ALLOY MEMBER**
LEGIERUNG AUF EISENBASIS, LEGIERUNGSELEMENT, PRODUKT UND VERFAHREN ZUR HERSTELLUNG DES LEGIERUNGSELEMENTS
ALLIAGE À BASE DE FE, ÉLÉMENT EN ALLIAGE, PRODUIT, AINSI QUE PROCÉDÉ DE FABRICATION D'UN ÉLÉMENT EN ALLIAGE

(30) Priority: 18.02.2022 JP 2022023967
(43) Date of publication of application: 12.06.2024
(73) Proprietor: Proterial, Ltd., Tokyo 135-0061 (JP)
(72) Inventor: OKAMOTO, Shinya, Tokyo 135-0061 (JP); KOSEKI, Shuho, Tokyo 135-0061 (JP)
(74) Representative: Goddar, Heinz J.
(86) International application number: PCT/JP2023/005937
(87) International publication number: WO 2023/157965

(56) References cited:
- WO-A1-2018/230421
- WO-A1-2020/110891
- WO-A1-2020/110891
- WO-A1-2020/149787
- CN-A- 110 102 768
- CN-B- 110 102 768
- JP-A- H09 316 601
- US-A1- 2016 348 222
- US-A1- 2019 040 481
- US-A1- 2019 263 056

## Description

### TECHNICAL FIELD OF THE INVENTION

The present invention relates to an Fe-based alloy, an alloy member, a product, and a method for manufacturing the alloy member.

### BACKGROUND OF THE INVENTION

For hot precision press working tools such as punching tools or metal dies, hot work tool steel such as SKD8, which is regulated by JIS G 4404, with high strength at elevated temperatures, or high-speed tool steel such as SKH51, which is regulated by JIS G 4403, have been used conventionally. However, with the above materials, set-in fatigue, wearing, fracture, and heat cracks can easily occur.

For example, Patent Document 1 discloses a high-speed tool steel that is fabricated by powder metallurgy and includes, by mass ratio, 0.8 - 3.95% of C, 30 - 50% of a total amount of W and Mo, in which the mass of Mo is twice the mass of W, 3.0 - 5.0% of Cr, 1.0 - 10.0% of V, 5 - 15% of Co with the remainder made up of Fe and unavoidable impurities. The high-speed tool steel disclosed in Patent Document 1 includes a lot of residual carbide at the time of quenching, and the residual carbide is finely dispersed uniformly onto a base. Thus, the high-speed tool steel has high wear resistance along with high toughness, thereby having high durability against cutting.

### RELATED ART

### PATENT DOCUMENT

[Patent Document 1] Japanese Unexamined Patent Application Publication No. S51-072906 (JP-A- S51-072906)
WO 2020/110891 A1, US 2019/263056 A1, CN 110102768 B, US 2019/040481 A1 and US 2016/348222 A1 disclose a method for manufacturing an alloy member, the method comprising: using alloy powder forming a solidified layer by melting and solidifying the alloy powder by applying a laser beam onto the alloy powder, forming another solidified layer onto the solidified layer; and repeating the above steps to obtain the alloy member having a layered structure. These documents also disclose a Fe-based alloy used for preparing the alloy member.

### SUMMARY OF THE INVENTION

### (PROBLEMS TO BE SOLVED BY THE INVENTION)

In the high-speed tool steel of Patent Document 1, since an alloy is formed by powder metallurgy, precipitation or segregation etc. of primary crystals may hardly occur compared to a common case in which molten metal is solidified, and thus a uniform structure can be easily formed both microscopically and macroscopically. In general, the uniform structure is effective for mechanical properties, and a wear resistant property can also be gained by the uniform dispersion of carbide. However, when used for metal dies or the like, adhesive wearing of slid faces thereof, in particular, may occur and thus higher wear resistance has been expected.

It is an object of the present invention to provide an Fe-based alloy having excellent mechanical properties as well as an excellent wear resistant property, an alloy member, a product, and a method for manufacturing the alloy member.

### (MEANS FOR SOLVING PROBLEMS)

The present invention is defined by the independent claims. Advantageous embodiments are described in dependent claims.

### (EFFECTS OF THE INVENTION)

The present invention can provide an Fe-based alloy having excellent mechanical properties as well as an excellent wear resistant property, an alloy member, a product, and a method for manufacturing the alloy member.

### BRIEF DESCRIPTION OF DRAWINGS

FIG. 1 is a view illustrating a schematic structure of a laser additive manufacturing method.
FIG. 2A is a photograph of a structure of an alloy member of the present invention after laser additive manufacturing.
FIG. 2B is a photograph of the structure of the alloy member in FIG. 2A after tempering.
FIG. 2C is a photograph of the structure of the alloy member in FIG. 2A after quenching.
FIG. 2D is a photograph of the structure of the alloy member in FIG. 2C after tempering.
FIG. 2E is a photograph of a structure of a press-forged material F0 after tempering.
FIG. 3 is an element-mapping image of the alloy member of the present invention after the laser additive manufacturing.
FIG. 4 is a graph showing HV0.5 of each alloy member.
FIG. 5A is a photograph of a structure of an alloy member of another embodiment of the present invention after laser additive manufacturing.
FIG. 5B is a photograph of the structure of the alloy member in FIG. 5A after tempering.
FIG. 5C is a photograph of the structure of the alloy member in FIG. 5A after quenching.
FIG. 5D is a photograph of the structure of the alloy member in FIG. 5C after tempering.
FIG. 5E is a photograph of a structure of a press-forged material F01 after quenching and tempering.
FIG. 6 is an element-mapping image of the alloy member of the present invention after the laser additive manufacturing.

### DESCRIPTION OF SOME EMBODIMENTS

Hereinafter, an embodiment of the present invention will be described. Firstly, an Fe-based alloy will be described, and then an additive manufacturing method will be described. In the descriptions hereinafter, "%" will refer to "mass percent". Also, in the present description, the numerical value range presented by using "-" will refer to a range that includes numerical values specified before and after "-", representing a lower limit value and an upper limit value of the range, respectively.

### (Fe-based Alloy)

An Fe-based alloy according to the present embodiment has an alloy structure including C, Cr, W, Mo, and V, with the remainder made up of Fe and unavoidable impurities, and including a Fe-BCC phase and a W-Mo-concentrated phase. By mass, the Fe-BCC phase includes 3 - 7% of C, 2 - 6% of Cr, 0.5 - 8% of W, 3 - 8% of Mo, 2 - 20% of V, and 60 - 90% of Fe, and the W-Mo-concentrated phase includes 5 - 13% of C, 2 - 12% of Cr, 7 - 17% of W, 11 - 22% of Mo, 3 - 19% of V, and 40 - 50% of Fe. The W-Mo-concentrated phase is formed so as to surround the Fe-BCC phase.

Also, the Fe-based alloy according to the present embodiment further includes, by mass, 10.5% or less of Co, the Fe-BCC phase includes 9% or more and 13% or less of Co, and the W-Mo-concentrated phase includes 6% or more and 11% or less of Co. Also, 3% or more and 11% or less is more preferable, and 6% or more and 10% or less of Co is further more preferable.

For the Fe-based alloy according to the present embodiment, since the W-Mo-concentrated phase is formed continuously in substantial ring shapes or the W-Mo-concentrated phase is divided but arranged in the substantial ring shapes, a structure in which the W-Mo-concentrated phase surrounds the Fe-BCC phase is obtained. In this way, the structure is microscopically heterogeneous, that is, the structure has a distribution of W-Mo-concentrated phase and Fe-BCC phase that are not completely mixed with each other. However, when such the structure happens to be a slid face, the relatively softer Fe-BCC phase wears down primarily before the relatively harder W-Mo-concentrated phase, leaving Fe-BCC phase surrounded by the W-Mo-concentrated phase being worn down into dimple shapes. However, the dimple-shaped parts hold lubricant oil, which can improve the wear resistance. In addition, such dimple-shaped parts are formed dispersedly, thereby preventing occurrence of adhesive wear.

Also, the Fe-based alloy as a whole includes, by mass, 0.3% or more and 2.8% or less of C, 3.0% or more and 10.0% or less of Cr, 1.5% or more and 10.5% or less of W, 2.0% or more and 9.0% or less of Mo, 1.0% or more and 8.0% of less of V, 10.5% or less of Co, and the remainder made up of Fe and unavoidable impurities. The Fe-based alloy further includes either Si and Mn, in which Si is included 1.0% or less by mass and Mn is included 0.1% or more and 1.0% or less by mass. Si is expected to improve oxidation resistance and preferably included within the above range when taking workability into consideration. Mn is expected to have effects on improving wear resistance and quenching performance as well on reducing embrittlement. On the other hand, taking influence of the embrittlement due to quench cracks or residual y into consideration, Mn is preferably included within the above range.

For the alloy of the present embodiment, an average crystal grain diameter of the Fe-BCC phase is 3.0 µm or more, or, preferably, 5.0 µm or more. Fe-BCC phase includes Fe in the BCC phase with C, Cr, W, Mo, V, and Co being included within the above-mentioned composition range. A method for calculating the average crystal grain diameter of the Fe-BCC phase will be described below.

### (W-Mo-concentrated phase)

The W-Mo-concentrated phase is a region in which W and Mo are more concentrated than in the Fe-BCC phase. The W-Mo-concentrated phase may preferably form mesh-like lamellar structures or depositions. The mesh-like lamellar structures or the depositions include a lot of W and Mo in particular. For example, a lower limit of a total amount of W and Mo (W + Mo) is preferably 15% or more, more preferably 20% or more, or further more preferably 26% or more. Also, an upper limit of the total amount of W and Mo (W + Mo) is preferably 60.0% or less, more preferably 52.0% or less, or further more preferably 45.0% or less. Also, for example, a lower limit of a ratio of the total amount of W and Mo (W + Mo) to Fe ((W + Mo) / Fe) in the W-Mo-concentrated phase is preferably 0.25 or more, and more preferably 0.60 or more. An upper limit of the ratio of the total amount of W and Mo (W + Mo) to Fe ((W + Mo) / Fe) is preferably 2.50 or less, and more preferably 2.40 or less.

The Fe-BCC phase is formed within a region that is surrounded by the mesh-like lamellar structure or the substantially ring-shaped depositions of the W-Mo-concentrated phase. That is, the W-Mo-concentrated phase is formed continuously in substantial ring shapes so as to surround the Fe-BCC phase (and other phases). The W-Mo-concentrated phase formed continuously in the substantial ring shapes is formed into substantial ring shapes having a circle equivalent diameter of approximately 10 µm in many cases, and the circle equivalent diameter is between 5 µm and 20 µm.

A lower limit of the average crystal grain diameter of the Fe-BCC phase formed within the region surrounded by the W-Mo-concentrated phase is 3.0 µm, preferably 4.8 mm, and more preferably 5.0 µm. The upper limit is 8.0 µm or less, preferably 6.5 µm or less, and more preferably 5.5 µm or less.

The W-Mo-concentrated phase may not be completely continuous but may be divided. For example, for the alloy of the present embodiment treated with quenching treatment or quenching and tempering treatments, depositions having a grain diameter of approximately 1 µm are formed being arranged in substantial ring shapes with circle equivalent diameters of 5 - 20 µm.

With the quenching treatment, the W-Mo-concentrated phase is to be temporarily a solid solution with the base, and carbide forming elements such as V, W, and Mo are deposited as carbide during a cooling process or a tempering process after the quenching. The above depositions with the grain diameter of approximately 1 µm are supposed to be a carbide phase of the deposited carbide. Even in this case, the W-Mo-concentrated phase may be formed being arranged in a predetermined direction forming a substantial ring shape as a whole, instead of being uniformly distributed. Such the form is referred to as "formed so as to surround the Fe-BCC phase" or "formed in substantial ring shapes". The region surrounded by the W-Mo-concentrated phase may include minute depositions having grain diameters of approximately 0.1 - 0.5 µm.

The carbide phase mentioned above is a region that includes more concentrated V, Mo, and W than in the Fe-BCC phase, with a lot of C. One example of composition of the carbide phase is, by mass, 10% - 16% of C, 1% - 5% of Cr, 8% - 25% of W, 13% - 23% of Mo, 25% - 35% of V, 0% - 5% of Co, and 3% - 35% of Fe.

Each structure can be evaluated by using an energy-dispersive X-ray spectroscopy (EDS) and an electron back scattering diffraction (EBSD) that are attached to a scanning electron microscope (SEM). For example, as a test piece to be used for analysis, a part of the alloy is embedded within resin and then a cut face of the embedded alloy is polished for a mirror finish.

Conditions for the analysis may be, for example, an acceleration voltage of 15 kV for the SEM, a working distance between an objective lens and a top surface of an observing sample of 10 mm, and an observation magnification of 3000 times. A method for evaluating an element distribution using EDS is to obtain an element-mapping image by surface analysis on the same visual field used for the above SEM. For example, when analyzing the W-Mo-concentrated phase, targeted elements may be, for example, eight elements: C, Co, Cr, Fe, Mo, O, V, and W. The Fe-BCC phase can also be analyzed in the same way as above. A method for evaluating the phases using EBSD is to obtain a phase mapping image of a visual field of 200 µm by 200 µm with a magnification of 400 times.

### (Average crystal grain diameter of Fe-BCC phase)

The above-mentioned average crystal grain diameter of the Fe-BCC phase can be calculated as below. Firstly, the phase map obtained by EBSD (e.g., an RGB image of 200 µm by 200 µm) is sectioned according to each color (red, green, and blue) to extract Fe-BCC parts only. Noises of the image are filtered and removed, and the image is converted into a monochrome binary image, which is then black/white inverted (e.g., an originally red section (Fe-BCC phase) will be shown as black). Next, the Fe-BCC phase part is segmented by using Watershed Algorithm, and diameters of the crystal grains forming the Fe-BCC phase within the segmented view fields are calculated to find the average value. In this way, the average crystal grain diameter forming the Fe-BCC phase (the average crystal grain diameter of the Fe-BCC phase) can be calculated.

More specifically, firstly, the phase map obtained by EBSD is sectioned into a red section (Fe-BCC phase), a blue section (mainly Fe-FCC phase), and a green section (a section that is neither Fe-BCC phase nor Fe-FCC phase, which will be referred to as a "zero solution section" hereafter). From such the sectioning operation of the phase map, ratios of Fe-BCC phase and deposited carbide within the structure can be found. By converting the image of the sectioned red section into a monochrome image, the Fe-BCC phase is shown as white. By inverting such the black/white image, the blue section and the green section is then shown as white. Here, a total area is a total of areas of the red section, the blue section, and the green section, and a value found by dividing the red section (Fe-BCC phase) by the total area can be expressed as an area ratio.

The zero solution section can be shown by taking off the images of the sectioned blue section from the black/white inverted image. The zero solution section is neither Fe-BCC phase nor Fe-FCC phase, and corresponds to the deposited carbide section. Next, an average area of the deposited carbide section in the visual field is calculated, and a circle equivalent diameter of the area is then calculated to find a circle equivalent average grain diameter of the deposited carbide in the Fe-BCC phase.

### (Unavoidable Impurities)

Unavoidable impurities refer to very small amounts of impurities that are technically difficult to be removed. The unavoidable impurities may have been mixed into raw materials or generated due to reactions or the like with various members that come into contact with the raw materials during manufacturing processes. In a case of the alloy according to the present embodiment, specific examples of the unavoidable impurities are Al, Cu, N, Ni, O, P, S, and Ti. Among such the unavoidable impurities, P, S, O, and N are impurities that are to be restricted in particular. By mass, P is preferably 0.03% or less, S is preferably less than 0.003%, O is preferably 0.02% or less, and N is preferably 0.05% or less. Naturally, less content of such the unavoidable impurities is preferable, and 0% of the unavoidable impurities is even better.

### (Method for Manufacturing Alloy Member)

The Fe-based alloy according to the present embodiment is manufactured by using alloy powder, forming a solidified layer by melting and solidifying the alloy powder according to a directed energy deposition method by applying a laser beam onto the alloy powder, forming a new solidified layer onto the solidified layer, and repeating the above operations to obtain an additively-manufactured alloy member. That is, the alloy is manufactured using a so-called additive manufacturing method.

### (Alloy Powder)

Here, the alloy powder is Fe-based alloy powder including the above-mentioned predetermined composition of C, Cr, W, Mo, V, and Co with the remainder made up of Fe and unavoidable impurities. Firstly, to obtain the alloy within the predetermined composition range, predetermined amounts of supply material of each of the elements are measured and are mixed together to produce raw powder. The raw powder is then used to obtain atomized powder. For example, the raw powder is loaded into a crucible and melted at high frequency. The melted alloy is dropped out of a nozzle at a bottom of the crucible, and then high-pressure Argon is sprayed to the alloy so as to produce gas-atomized powder. The gas-atomized powder is then classified to obtain the alloy powder.

### (Grain Diameter)

The additive manufacturing method is a method for making a product by additive formation, in which fusion and solidification are repeated on individual powders. However, if a grain diameter of the alloy powder is less than 5 µm, it is difficult to obtain a volume required for one fusion-solidification, which makes it difficult to produce a decent additively-manufactured product. On the other hand, if the grain diameter of the alloy powder is more than 250 µm, the volume required for one fusion-solidification is too large, which also makes it difficult to produce a decent additively-manufactured product. Thus, the grain diameter of the alloy powder is preferably between 5 µm and 250 µm, and more preferably between 10 µm and 150 µm. Spherical powders that can be obtained from a gas-atomizing method are preferable. Also, for the grain diameters of the powders, a grain size distribution may be measured by using a laser diffraction grain size distribution measuring apparatus, for example.

For different types of additive manufacturing method, for example, the grain diameter is preferably between 10 µm and 53 µm in a selective laser melting (SLM) method; and the grain diameter is more preferably between 45 µm and 105 µm in an electron beam melting (EBM) method. Also, the grain diameter is preferably between 53 µm and 150 µm, or more preferably between 53 µm and 106 µm, in a laser metal deposition (LMD) method.

Also, in a cumulative distribution curve, which is found by a laser diffraction method and shows a relationship between the grain diameter and a cumulative volume from a side of small grain diameters, if a cumulative frequency of 50 volume% is referred to as D50, D50 is preferably 50 µm - 100 µm, and more preferably 70 µm - 80 µm.

As mentioned above, the Fe-based alloy powder includes, by mass, 0.3 - 2.8% of C, 3.0 - 10.0% of Cr, 1.5 - 10.5% of W, 2.0 - 9.0% of Mo, 1.0 - 8.0% of V, and the remainder made up of Fe. The Fe-based alloy powder further includes Si and Mn. The Fe-based alloy powder includes 10.5% or less of Co.

For example, the Fe-based alloy powder including, by mass, 0.3 - 2.8% of C, more than 0% and 1.0% or less of Si, 0.1 - 1.0% of Mn, 3.0 - 10.0% of Cr, 1.5 - 10.5% of W, 2.0 - 9.0% of Mo, 1.0 - 8.0% of V, and the remainder made up of Fe and unavoidable impurities may be used.

Also, the Fe-based alloy powder includes Co, and, in such the case, the Fe-based alloy powder including, by mass, 0.3 - 2.8% of C, more than 0% and 1.0% or less of Si, 0.1 - 1.0% of Mn, 3.0 - 10.0% of Cr, 1.5 - 10.5% of W, 2.0 - 9.0% of Mo, 1.0 - 8.0% of V, more than 0% and 10.5% or less of Co, and the remainder made up of Fe and unavoidable impurities is used.

The composition of the alloy powder can be analyzed by using, for example, a highfrequency inductive coupling plasma (ICP) emission analysis method.

As an embodiment in which a product is fabricated through fusion and solidification by applying a laser beam, the additive manufacturing method for metal materials (referred to as "additive manufacturing" in the present invention) according to the present invention is a directed energy deposition (DED) method.

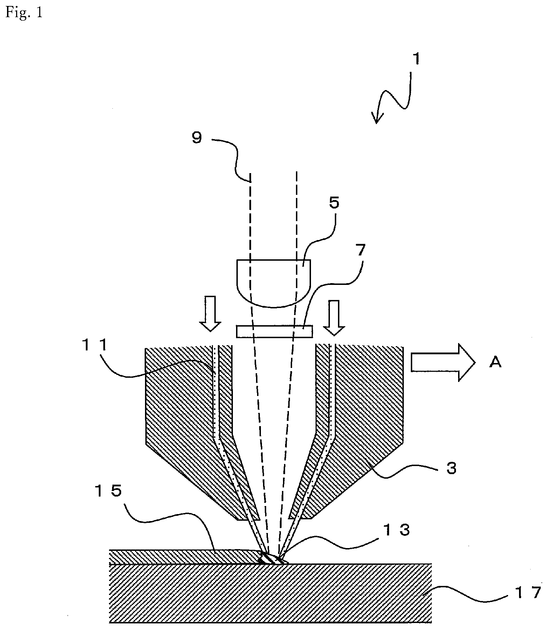

FIG. 1 is a view showing a schematic structure of an additive manufacturing device 1 for additive manufacturing using the directed energy deposition method with a laser as a heat source. The additive manufacturing device 1 mainly includes a powder delivery nozzle 3, a focusing lens 5, a protector lens 7, and so on. Alloy powder 11 is fed into the powder delivery nozzle 3 and is sprayed together with argon gas to a tip end of the powder delivery nozzle 3. A laser beam 9 that is emitted from a laser oscillator, of which an illustration is omitted, is condensed by the focusing lens 5 and irradiated to a proximity of a tip end part of the powder delivery nozzle 3. The protector lens 7 is provided on a lower part of the focusing lens 5.

In the additive manufacturing, the powder delivery nozzle 3 is moved in relation to a base plate 17 (in a direction A in FIG. 1) while feeding the alloy powder 11 over the base plate 17. The laser beam 9 condensed by the focusing lens 5 is irradiated onto the fed alloy powder 11, which then melts and forms a molten pool 13. The molten pool 13 is solidified so that a product 15 (the Fe-based alloy) can be formed. Theses steps are repeated as necessary so that a three-dimensional alloy member including at least partly the Fe-based alloy is produced by laminating the products 15 onto the base plate 17.

The directed energy deposition method is a method for manufacturing an alloy member (a product) having a layered structure by spraying alloy powder while being moved over a base material, forming a solidified layer by melting and solidifying the alloy powder by applying an electron beam or a laser beam onto the sprayed alloy powder, forming another solidified layer onto the formed solidified layer, and repeating the above steps. More specifically, by using a three-dimensional additive manufacturing apparatus, a base plate or a surface of a product is melted rapidly by laser irradiation, raw material powder is fed into the molten pool formed by the fusion, which is then solidified by rapid cooling, and such a series of processes is repeated to produce the product. The product formed on the base plate is the Fe-based alloy according to the present embodiment. Conditions for the additive manufacturing are determined accordingly taking the grain diameter and composition of the raw powder, a size, a shape, and properties of the product, productivity, etc. into consideration. For the alloy according to the present embodiment, the conditions can be selected within the following ranges.

A thickness of one layer for the additive manufacturing is 0.1 - 1.0 mm or more preferably 0.4 - 0.5 mm, for example. A thickness of a first layer of the Fe-based alloy that is formed on a surface of a base material (the base plate) (a thickness from an interface of the base material to the surface of the first layer of the Fe-based alloy including a diffusion layer in a proximity of the interface) is 0.1 - 1 mm, and a total thickness from the interface of the base material to the surface of the Fe-based alloy (a thickness including the diffusion layer in the proximity of the interface) is 0.1 - 2 mm. A beam diameter of the laser is 3 mm at an emission position. A laser power is 1500 - 2500 W. A laser scanning speed is 500 - 1000 mm/min. An amount of powder feed is 10 - 20 g/min.

An energy density (an energy density of a heat source: J/mm) that is to be input by the laser emission for rapid fusion of the raw material is 90 - 300 J/mm, or more preferably within a range of 180 - 240 J/mm. If the energy density is too small, a defect rate may rise and, furthermore, the fed powder may not melt, which makes it harder to maintain the shape of the product. Meanwhile, if the energy density is too large, a wide range of the base plate or the product, with a center at the laser emission position, may melt, which also makes it harder to maintain the shape of the product. The energy density E (J/mm) can be found from Formula 1 using a laser power P (W) and a laser scanning speed v (mm/min).
(Formula 1)$E = P / v \times 60$ (1)

### (Heat Treatment)

Basically, the alloy according to the present embodiment can be used as being molded without any heat treatments. However, if the costs etc. are within permissible ranges, an additional heat treatment may be performed. For the heat treatment, either one of or both of quenching treatment and tempering treatment may be performed. Nevertheless, it is preferable to perform the tempering treatment only, without the quenching treatment at a high temperature.

Conditions for the heat treatment are, for example, in a case of the quenching treatment, holding at a temperature of 1180 - 1220 °C for 10 - 60 minutes and then cooling in oil or water. It is more preferable to cool in the oil to prevent distortion and quench cracks. Quenching and cooling using a salt bath may also be performed. The tempering treatment is a heat treatment process in which the alloy is to be kept at 400 °C or more and 700 °C or less, and, for example, the alloy is preferably maintained at a temperature of 560 - 580 °C for 2 - 6 hours and then cooled in the air.

### (Surface Treatment)

Also, a surface treatment may be applied to the obtained alloy member. A surface treatment process for applying the surface treatment to the alloy member includes, for example, a film formation on the top surface of the Fe-based alloy using a nitride treatment or a PVD method for forming a nitride layer, a compound layer, or a ceramic coating layer. If the surface treatment is to be performed, any one or more of the nitride layer, the compound layer, and the ceramic coating layer may be chosen.

### (Hardness)

Hardness of the top layer of the alloy member can be evaluated by Vickers hardness HV (hereinafter, referred to as "the hardness"). The hardness is desirably 350 HV or more, preferably 500 HV or more, more preferably 700 HV or more, further preferably 800 HV or more, and furthermore preferably 900 HV or more. In a case without the heat treatment, 350 HV or more, or more preferably 500 HV or more can be obtained. Also, in a case with the heat treatment, 700 HV or more, more preferably 800 HV or more, and further preferably 900 HV or more can be obtained.

For a measuring method of the Vickers hardness HV, for example, an indentation load for a Vickers indenter is 0.5 kg, a retention time for indentation is 10 seconds, and the hardness is found from a length of a diagonal of an impression formed on the measuring surface due to indentation of the indenter.

### (Products)

Although products that include at least partly the alloy member obtained as above are not particularly limited, especially favorable examples thereof are a hot stamping die, a cold forging die, and a cold pressing die. In such cases, even if a part of a surface of a metal die, for example, is damaged, repairing is easy since the alloy layer of the present invention can be formed by deposition only on the damaged part. The Fe-based alloy here according to the present embodiment has excellent mechanical properties as well as an excellent wear resistant property with no adhesion.

### WORKING EXAMPLES

### (Experiment 1)

As working examples, to obtain products with aimed compositions, predetermined amounts of supply material of each of the elements are measured and are mixed together to produce raw powder. The raw powder is then loaded into a crucible and melted at high frequency in a vacuum. The melted alloy is dropped out of a nozzle of 5 mm diameter at a bottom of the crucible, and then high-pressure Argon is sprayed to the alloy so as to produce gas-atomized powder. The gas-atomized powder is then classified to obtain iron based (Fe-based) alloy powder (raw powder) of 53 - 106 µm and 71 µm at D50. The compositions of the obtained iron based alloy powder are shown in Table 1 and Table 2.

**(Table 1)**

| (mass%) | | | | | | |
|---|---|---|---|---|---|---|
| C | Cr | W | Mo | V | Co | Fe |
| 2.034 | 4.27 | 9.31 | 8.21 | 5.11 | 9.60 | Bal. |

**(Table 2)**

| (mass%) | | | | | | | | | |
|---|---|---|---|---|---|---|---|---|---|
| Si | Mn | P | S | Ni | Cu | Al | Ti | N | O |
| 0.42 | 0.28 | 0.026 | 0.002 | 0.16 | 0.06 | 0.001 | 0.001 | 0.041 | 0.009 |

Next, by using a three-dimensional additive manufacturing apparatus using the directed energy deposition method (LASERTEC65 3D Hybrid, by DMG MORI Co., Ltd.), the raw powder is fed to a molten pool formed by laser emission on a base plate and melted and solidified rapidly to fabricate a product having a width of 3 mm, a length of 80 mm, and a lamination height of approximately 10 mm. The conditions for the additive manufacturing are as follows. For the base plate, maraging steel (YAG 300 by Proterial, Ltd. (YAG is a registered trademark of Proterial, Ltd.)) is used.

The conditions for the additive manufacturing are:
Thickness of one layer at the time of additive manufacturing: 0.45 mm;
Laser beam diameter: 3 mm;
Laser power: 2400 W;
Laser scanning speed: 600 mm/min; and
Energy density: 240 J/mm.

The products with and without heat treatments are evaluated. The heat treatments for the evaluation are: tempering only; quenching only; and tempering + quenching. The product being left as is after molding (no heat treatment) is referred to as F1, the product treated with tempering only is referred to as F2, the product treated with quenching only is referred to as F3, and the product treated with quenching and tempering is referred to as F4. For the heat treatments of the products, the product is held at 1200 °C for 0.5 hours and then cooled in oil in the quenching treatment; and the product is held at 560 °C for 4 hours and then cooled in the air in the tempering treatment. The products of the Fe-based alloy according to the present embodiment are obtained after such the heat treatments.

Each working example of the obtained Fe-based alloy products F1 - F4 is observed under an SEM and EDS and evaluated. A test piece for the observation is prepared by cutting a part of the product into a small piece and embedded within resin and polishing a cut face of the embedded product to a mirror finish. An observation magnification is 3000 times. Also, an element mapping image is obtained by using an EDS on the same visual field of the SEM image with a magnification of 3000 times. The analyzed elements are eight elements: C, Co, Cr, Fe, Mo, O, V, and W.

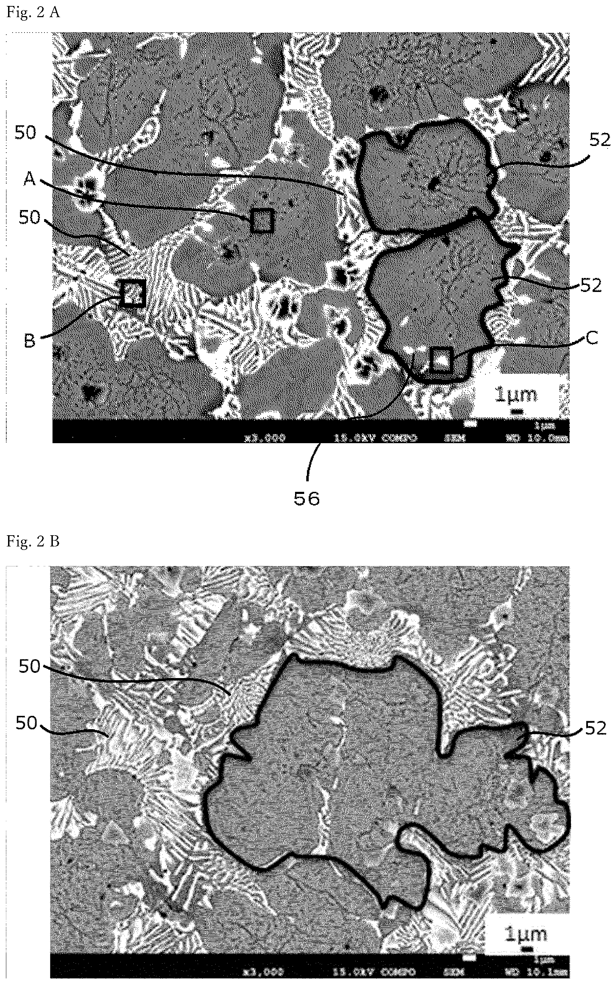

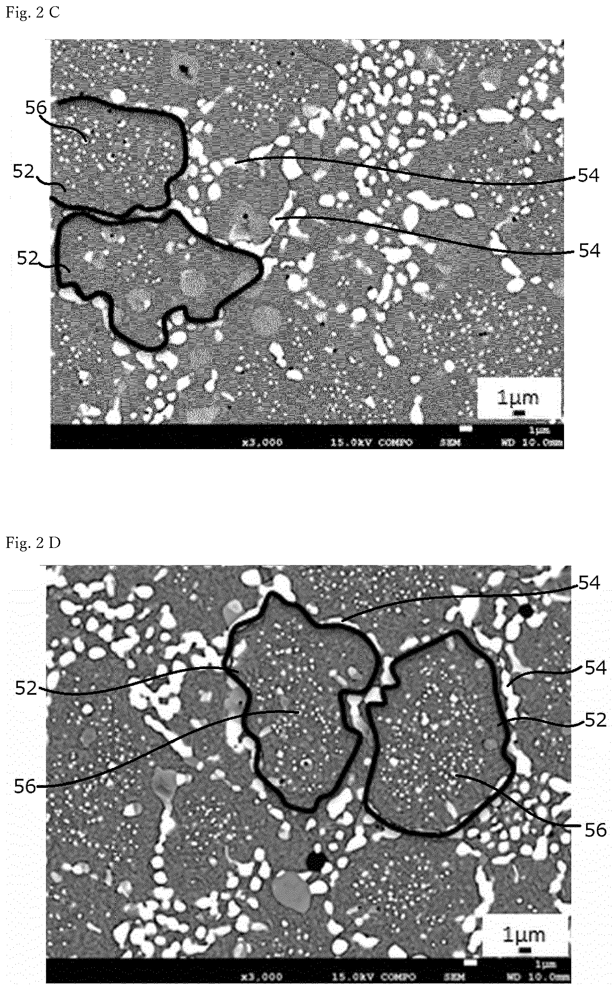

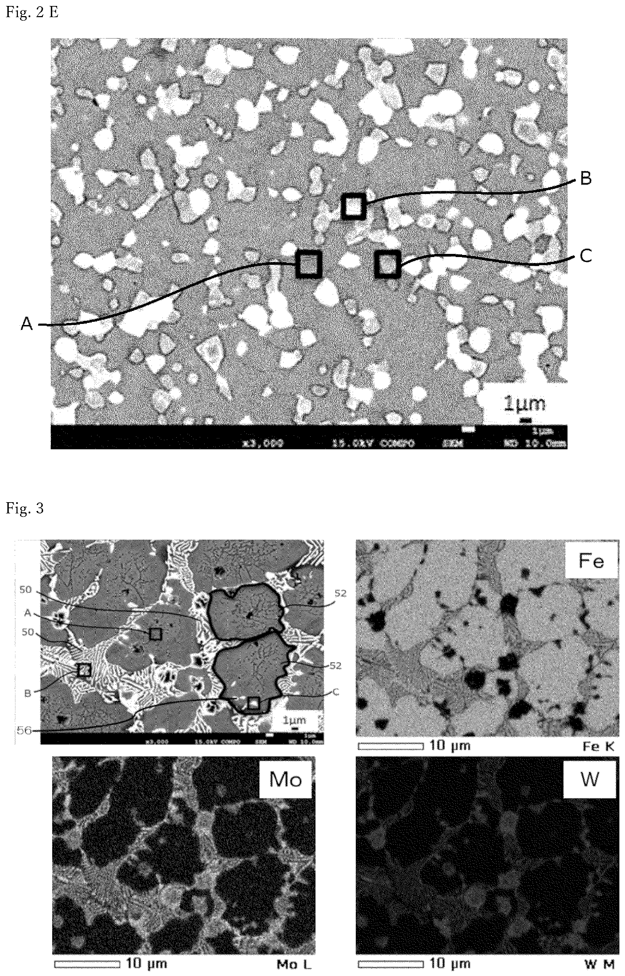

Examples of obtained SEM images are shown in FIG. 2A - FIG. 2E. FIG. 2A shows the product F1 without any heat treatments (no heat treatment), FIG. 2B shows the product F2 with the tempering heat treatment, FIG. 2C shows the product F3 with only the quenching heat treatment, and FIG. 2D shows the product F4 with the quenching + tempering heat treatment. FIG. 2E shows a structure of a comparison alloy having the same composition that is produced by press forging, in which powders are sintered in a conventional powder metallurgy, with heat treatments (a sample treated with quenching and tempering; hereinafter, the press-forged material will be referred to as "F0"). FIG. 3 shows examples of mapping of element-mapping images (W, Mo, Fe, Cr) obtained for the product F1. The visual field area of each of the element-mapping images is 46 µm by 35 µm and the magnification is 3000 times.

By looking at FIG. 2A - FIG. 2E, it is found that, from the SEM images, mesh-like lamellar structures 50 exist in the product F1, which is left as is without the heat treatments after being molded, and in the product F2, which is treated with only the tempering treatment after being molded. By looking at FIG. 3 showing the element-mapping images, it is also found that the structures including Mo and W form the mesh-like lamellar structures.
Although the mesh-like lamellar structures and gray-colored regions 52 that are surrounded by the W-Mo-concentrated phases can be observed, it is impossible to define that the gray-colored regions 52 are all Fe-BCC phases. Thus, the crystal grain diameter forming the Fe-BCC phase is to be calculated by the above-mentioned method.

As shown in FIG. 2A and FIG. 3, the mesh-like lamellar structures are observed as striped patterns. From the element-mapping images shown in FIG. 3, it is found that the mesh-like lamellar structure 50 observed as striped-patterns includes Fe, Mo, and W, and that the lamellar structure 50 can be observed as mesh-like forms since a part including a relatively low concentration of Fe element and a relatively high concentration of Mo and W elements is arranged adjacent to a part including a relatively high concentration of Fe element and a relatively low concentration of Mo and W elements. It is also found that the lamellar structure 50 is a W-Mo-concentrated phase, in which W and Mo are more concentrated than in parts other than the lamellar structure.

Also, for the product F1, minute depositions 56 having grain diameters of approximately 0.1 - 0.5 µm are found in the lamellar structure, i.e. the Fe-BCC phase 52 (inside a black frame in the drawing) surrounded by the W-Mo-concentrated phase. It is also found, from the element-mapping images shown in FIG. 3, that such the depositions also include Mo and W.

It is found that, from the SEM images, in the product F3, which is treated with the quenching treatment after being molded, and in the product F4, which is treated with the quenching and tempering treatments after being molded, the depositions 54 having grain diameters of approximately 1 µm are arranged in ring shapes having circle equivalent diameters of 5 µm - 20 µm. Similarly to the product F1, the element-mapping images for the product F3 and the product F4 are obtained, and it is found from the element-mapping images that the deposition 54 arranged in the ring shapes is the W-Mo-concentrated phase including Mo and W. Also, the minute depositions 56 having grain diameters of approximately 0.1 - 0.5 µm are found inside the Fe-BCC phase 52 (inside a black frame in the drawing) surrounded by the depositions 54 having grain diameters of approximately 1 µm, and it is found from the element-mapping images that such the depositions also include Mo and W.

Table 3 shows composition of each phase of the product F1 with no heat treatment. In FIG. 2A, the Fe-BCC phase is analyzed at a section A, the W-Mo-concentrated phase is analyzed at a section B, and carbide is analyzed at a section C. As shown in Table 3, the W-Mo-concentrated phase (the section B) of the product F1 includes 15.6% of W and 14.5% of Mo, and a total amount of W and Mo (W + Mo) is 30.1%. Also, since the amount of Fe is 44.9%, a ratio of the total amount of W and Mo to Fe ((W + Mo) / Fe) in the concentrated phase is 0.67.

**[Table 3]**

| (mass%) | | | | | | | |
|---|---|---|---|---|---|---|---|
| | c | Cr | W | Mo | V | Co | Fe |
| Fe-BCC phase | 5.4 | 3.7 | 6.1 | 4.0 | 2.7 | 11.6 | 66.4 |
| W-Mo-concentrated phase | 6.6 | 5.1 | 15.6 | 14.5 | 5.2 | 8.0 | 44.9 |
| Carbide | 12.7 | 2.0 | 20.2 | 15.8 | 28.6 | 3.5 | 17.4 |

Also, the Fe-BCC phase mainly includes Fe and also includes Cr, W, Mo, V, Co, C, and so on within predetermined ranges. Electron diffraction patterns generated at the time of emitting electron beams to the surface of the product samples are measured by using EBSD, which can show that the Fe-BCC phase has a BCC structure.

On the other hand, Table 4 shows composition of each phase of the press-forged material F0. Similarly to the case of the product F1 with no heat treatment, in FIG. 2E, the Fe-BCC phase is analyzed at a section A, the W-Mo-concentrated phase is analyzed at a section B, and carbide is analyzed at a section C. Also, as shown in Table 4, the W-Mo-concentrated phase (the section B) of the press-forged material F0 includes 30.5% of W and 22.6% of Mo, and a total amount of W and Mo (W + Mo) is 53.1%. Also, since the amount of Fe is 22.1%, a ratio of the total amount of W and Mo to Fe ((W + Mo) / Fe) in the concentrated phase is 2.40.

**[Table 4]**

| (mass%) | | | | | | | |
|---|---|---|---|---|---|---|---|
| | c | Cr | W | Mo | V | Co | Fe |
| Fe-BCC phase | 5.0 | 4.5 | 6.3 | 6.6 | 1.5 | 10.2 | 65.8 |
| (W-Mo-concentrated phase) | 7.9 | 4.1 | 30.5 | 22.6 | 8.2 | 4.6 | 22.1 |
| Carbide | 14.4 | 3.5 | 22.5 | 19.2 | 34.9 | 0.7 | 4.9 |

In the press-forged material F0, although it is shown that the Fe-BCC phase has approximately the same composition as that of the working example products, the composition of the W-Mo-concentrated phase is largely different from that of the products F1 - F4. That is, in the press-forged material F0, although the phase in which W and Mo are concentrated exists, the W-Mo-concentrated phase of the press-forged material F0 includes less Fe and more W and Mo than the products F1 - F4. Also, looking at V that has high capability of carbide formation, the W-Mo-concentrated phase of the product F1 includes 5.2% of V, whereas the W-Mo-concentrated phase of the press-forged material F0 includes 8.2% of V, and thus the press-forged material F0 has a higher concentration of V. It is estimated from the above that carbide formation is more accelerated in the W-Mo-concentrated phase of the press-forged material F0 than in the W-Mo-concentrated phase of the product F1 with no heat treatment.

Thus, the W-Mo-concentrated phase of the press-forged material F0 is harder than the W-Mo-concentrated phase of the product F1 with no heat treatment, for example. In the press-forged material F0, from FIG. 2E, the hard W-Mo-concentrated phases are distributed uniformly with the Fe-BCC phases. Thus, when a face thereof is slid, the face wears out evenly, and this can result in an oil film shortage of the slid face, which is likely to result in adhesive wear.

Next, the average crystal grain diameter of the Fe-BCC phase is evaluated. The average crystal grain diameter of the Fe-BCC phase for each of F1 - F4 and the press-forged material F0 is calculated by using the above method. The results are shown in Table 5. As shown in Table 5, the average crystal grain diameter of the Fe-BCC phase is 5. 28 µm for the product F1 with no heat treatment, 5.33 µm for the product F2 with the tempering treatment, 4.65 µm for the product F3 with the quenching treatment, and 4.57 µm for the product F4 with the quenching and tempering treatments. Also, the average crystal grain diameter of the Fe-BCC phase is 5.17 µm for the press-forged material F0.

**[Table 5]**

| No. | Fe-BCC phase Ratio (%) | Average Crystal Grain Diameter of Fe-BCC phase (µm) | Deposited Carbide Ratio (%) | Circle Equivalent Average Grain Diameter of Deposited Carbide (µm) |
|---|---|---|---|---|
| F1 | 45.5 | 5.28 | 1.18 | 1.23 |
| F2 | 45.0 | 5.33 | 0.55 | 1.17 |
| F3 | 44.8 | 4.65 | 1.05 | 1.07 |
| F4 | 44.8 | 4.57 | 0.44 | 1.08 |
| F0 | 45.4 | 5.17 | 0.66 | 1.10 |

In general, as a method for improving mechanical properties, a structure is to be micronized and homogenized. A press-forged material is obtained by sintering powders followed by press forging and heat treatment so as to avoid weight segregation, etc. and to obtain a uniform structure. According to such the method, as above, it is possible to obtain a structure in which the Fe-BCC phase is relatively small and the W-Mo-concentrated phase and the Fe-BCC phase are uniformly dispersed in a microscopic way.

In the present embodiment on the other hand, the W-Mo-concentrated phase is formed continuously in substantial ring shapes like a lamellar structure, or the W-Mo-concentrated phase is divided but yet arranged in substantial ring shapes. Thus, a structure in which the W-Mo-concentrated phase surrounds the Fe-BCC phase can be obtained. In this way, the structure is microscopically heterogeneous (the structure has a distribution of W-Mo-concentrated phase and Fe-BCC phase that are not completely mixed with each other). However, when such the structure happens to be a slid face, the relatively softer Fe-BCC phase wears down primarily before the relatively harder W-Mo-concentrated phase, and the Fe-BCC phase surrounded by the W-Mo-concentrated phase wears out into dimple shapes having a circle equivalent diameter of 3.0 µm or more. Thus, the dimple-shaped parts hold lubricating oil, and this can improve wear resistance. In addition, such the dimple-shaped parts are formed dispersedly, thereby preventing occurrence of adhesive wear.

The press-forged material F0, on the other hand, has high hardness as a whole as mentioned above. However, the W-Mo-concentrated phase and the Fe-BCC phase are dispersed uniformly and thus wearing progresses substantially uniformly and simultaneously as a whole. Thus, dimples or the like may not be generated, which may lead to a grease shortage and adhesion. As above, according to the present embodiment, adhesion and the like can be prevented efficiently.

### [Hardness]

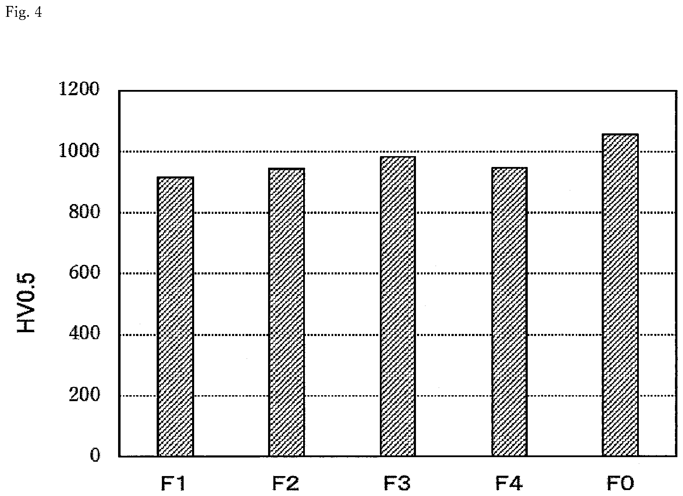

Hardness of the obtained Fe-based alloy products F1 - F4 is measured by using a Vickers hardness measuring device. Conditions for the measurement are: an indentation load for a Vickers indenter is 0.5 kg, a retention time for indentation is 10 seconds, and the hardness is found from a length of a diagonal of an impression formed on the measuring surface due to indentation of the indenter. The number of measurement points is 5 and an average value is calculated. Table 6 shows the results and FIG. 4 shows a comparison with the press-forged material F0.

**[Table 6]**

| No. | Quenching | Tempering | Hardness (HV) |
|---|---|---|---|
| F1 | - | - | 916 |
| F2 | - | Done | 944 |
| F3 | Done | - | 983 |
| F4 | Done | Done | 946 |
| F0 | Done | Done | 1055 |

The product F1, which is left as is without the heat treatments after being molded, is found to have high hardness of 916 HV. This may be due to effects of the mesh-like lamellar structure. Also, it is found that the product F2 with only the tempering treatment after molding has hardness of 944 HV, the product F3 with the quenching treatment after molding has hardness of 983 HV, and the product F4 with the quenching and tempering treatments after molding has hardness of 946 HV. Although the press-forged material F0 with the quenching and tempering treatments has the highest hardness, the hardness drops to a half or less thereof if the quenching and tempering treatments are not performed onto the press-forged material. Thus, it can be said that the products have higher hardness than the press-forged material. As above, in the present embodiment, the sufficient hardness of 900 HV or more can be obtained in any of the cases, with or without the heat treatments.

As mentioned above, the product F1 and the product F2 have the mesh-like lamellar structures being formed, and are expected to have high toughness. Also, as shown in FIG. 2C and FIG. 2D, in the product F3 and the product F4, the ring-shaped depositions 54 including Mo and W exist, and thus the Fe-BCC phase and the depositions 54 are unevenly distributed. As a result, hard parts and relatively softer parts exist together in the structure of the products F3 and F4, and thus high toughness can also be expected as in the products F1 and F2.

Although the products including Co are evaluated in the working example above, Co is not always necessary. Inclusion of a predetermined amount of Co can provide high mechanical properties without heat treatments. However, in cases in which Co is not included, as will be described below in Experiment 2, sufficient mechanical properties can be obtained by performing heat treatments such as quenching.

### [Experiment 2]

Next, a product is fabricated by using iron-based alloy powders having an alloy composition as shown in Table 7. Similarly to Experiment 1, to obtain a product with an aimed composition, predetermined amounts of supply material of each of the elements are measured and are mixed together to produce raw powder. The raw powder is then loaded into a crucible and melted at high frequency in a vacuum. The melted alloy is dropped out of a nozzle of 5 mm diameter at a bottom of the crucible, and then high-pressure Argon is sprayed to the alloy so as to produce gas-atomized powder. The gas-atomized powder is then classified to obtain iron based (Fe-based) alloy powder of 53 - 106 µm and 73 µm at D50. Co is considered to be included as an unavoidable impurity.

**(Table 7)**

| (mass%) | | | | | | | | |
|---|---|---|---|---|---|---|---|---|
| c | Si | Mn | Cr | W | Mo | V | Co | Fe |
| 1.30 | 0.62 | 0.27 | 4.99 | 2.95 | 5.94 | 3.81 | 0.21 | Bal. |

Next, by using a three-dimensional additive manufacturing apparatus using the directed energy deposition method (LASERTEC65 3D Hybrid, by DMG MORI Co., Ltd.), the raw powder is fed to a molten pool formed by laser emission on a base plate and melted and solidified rapidly to fabricate a product having a width of 3 mm, a length of 80 mm, and a lamination height of approximately 10 mm. The conditions for the additive manufacturing are the same as in above-mentioned Experiment 1. For the base plate, maraging steel (YAG 300 by Proterial, Ltd. (YAG is a registered trademark of Proterial,Ltd.)) is used.

The products with and without heat treatments are evaluated. The heat treatments for the evaluation are: tempering only; quenching only; and tempering + quenching. The product being left as is after molding (without the heat treatments) is referred to as F11, the product treated with tempering only is referred to as F12, the product treated with quenching only is referred to as F13, and the product treated with quenching and tempering is referred to as F14. For the heat treatments of the products, similarly to the conditions in Experiment 1, the product is held at 1200 °C for 0.5 hours and then cooled in oil in the quenching treatment; and the product is held at 560 °C for 4 hours and then cooled in the air in the tempering treatment.

Each of the obtained Fe-based alloy products F11 - F14 is observed under an SEM and EDS and evaluated. A test piece for the observation is prepared by cutting a part of the product into a small piece and embedded within resin, and polishing a cut face of the embedded product to a mirror finish. An observation magnification is 3000 times. Also, an element mapping image is obtained by using an EDS on the same visual field of the SEM image with a magnification of 3000 times. The analyzed elements are eight elements: C, Co, Cr, Fe, Mo, O, V, and W.

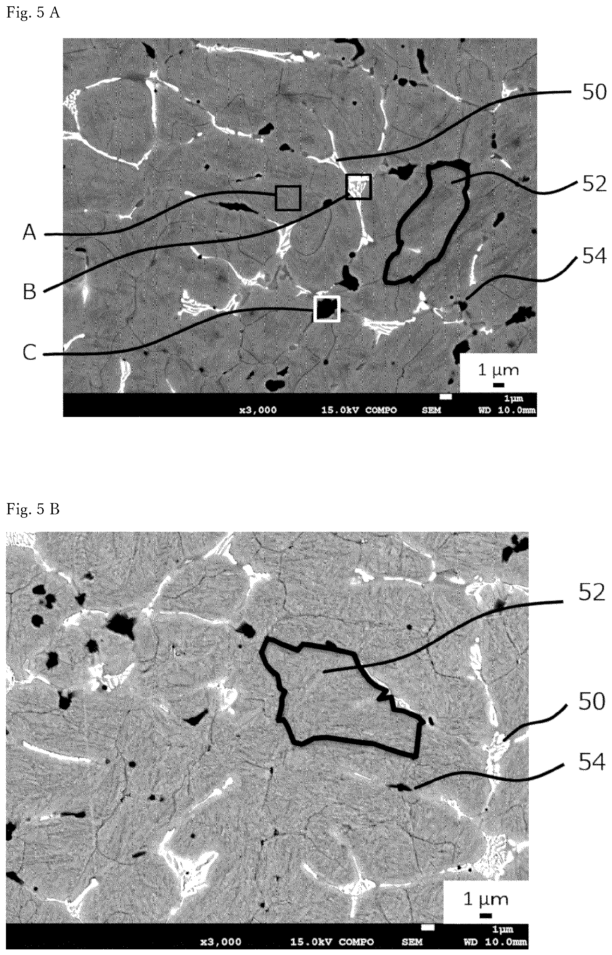

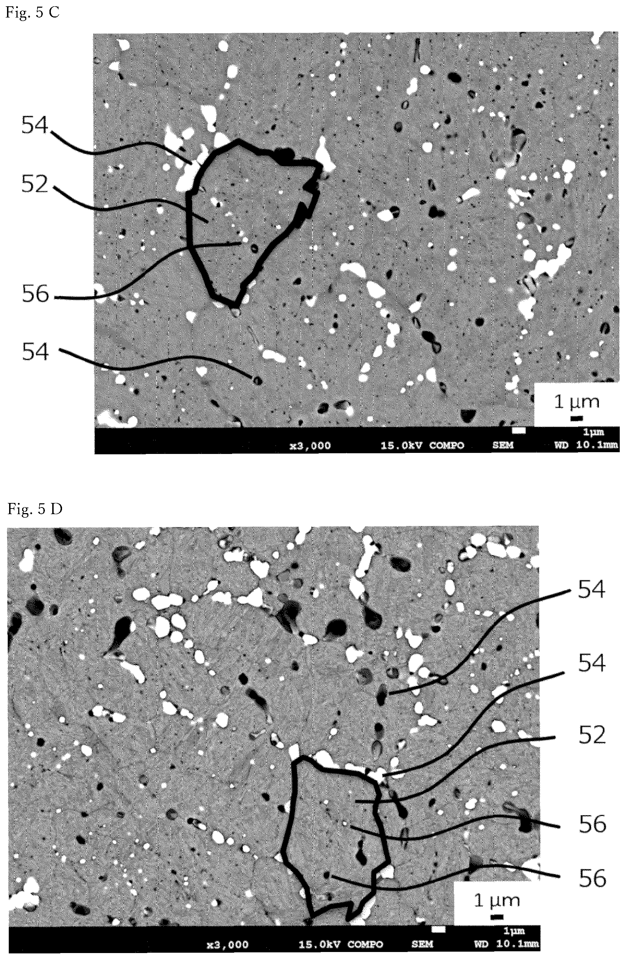

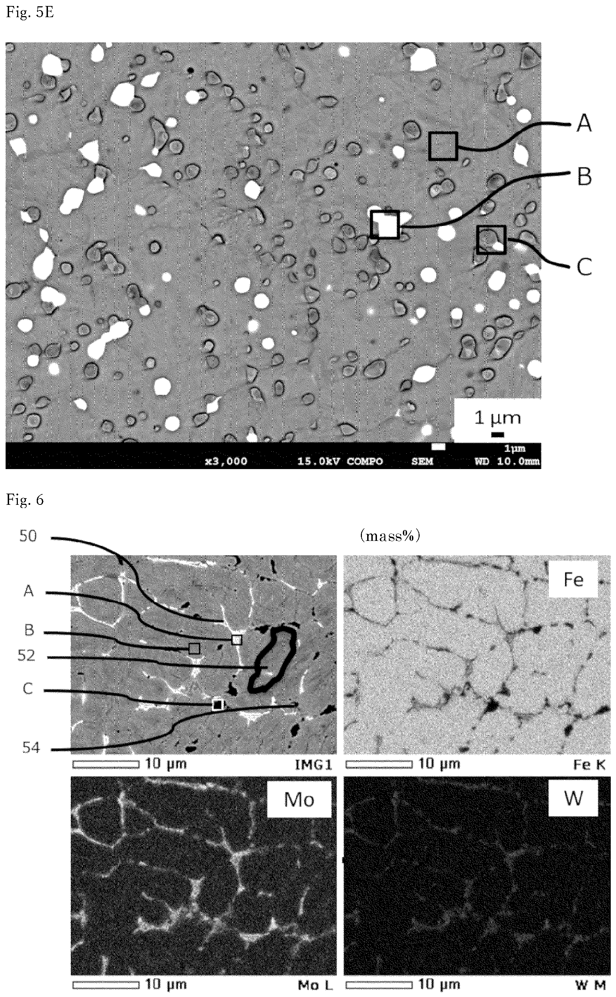

Examples of obtained SEM images are shown in FIG. 5A - FIG. 5E. FIG. 5A shows the product F11 without any heat treatments (no heat treatment), FIG. 5B shows the product F12 with the tempering heat treatment, FIG. 5C shows the product F13 with the quenching heat treatment, and FIG. 5D shows the product F14 with the quenching + tempering heat treatment. FIG. 5E shows a structure of a comparison alloy having the same composition that is produced by press forging, in which powders are sintered in a conventional powder metallurgy, with heat treatments (a sample treated with quenching and tempering; hereinafter, the press-forged material will be referred to as F01). FIG. 6 shows examples of mapping of element-mapping images (W, Mo, Fe, Cr) obtained for the product F11. The visual field area of each of the element-mapping images is 46 µm by 35 µm and the magnification is 3000 times.

The crystal grain diameter forming the Fe-BCC phase is calculated by using the above-mentioned method. Also, as shown in FIG. 5A and FIG. 5B, it is found that, from the SEM images, mesh-like lamellar structures 50 exist in the product F11, which is left as is without the heat treatments after being molded, and in the product F12, which is treated with only the tempering treatment after being molded.

From the results of checking EDS surface analysis image, it is found that the mesh-like lamellar structure 50 includes Fe, Mo, and W, and the lamellar structure 50 can be observed as mesh-like forms since a part including a relatively low concentration of Fe element and a relatively high concentration of Mo and W elements is arranged adjacent to a part including a relatively high concentration of Fe element and a relatively low concentration of Mo and W elements. It is also found that the lamellar structure 50 is a W-Mo-concentrated phase, in which W and Mo are more concentrated than in parts other than the lamellar structure. Looking at the element mapping images shown in FIG. 6, it is also found that the structures including Mo and W are formed as the lamellar structures or in mesh-like forms.

As shown in FIG. 5C, which is the SEM image of the product F13 that is treated with the quenching treatment after being molded, and in FIG. 5D, which is the SEM image of the product F14 that is treated with the quenching and tempering treatments after being molded, it is found that the depositions 54 having grain diameters of approximately 1 µm - 2 µm are arranged in ring shapes having circle equivalent diameters of 5 µm - 20 µm. Also, as a result of checking the EDS surface analysis image, it is found that the deposition 54 is the W-Mo-concentrated phase including Mo and W. Also, the minute depositions 56 having grain diameters of approximately 0.1 - 0.5 µm exist, and it is found from the results of EDS surface analysis image that such the depositions also include Mo and W.

Table 8 shows composition of each phase of the product F11 as an example. In FIG. 5A, the Fe-BCC phase is analyzed at a section A, the W-Mo-concentrated phase is analyzed at a section B, and carbide is analyzed at a section C. As shown in Table 8, the W-Mo-concentrated phase (the section B) of the product F11 includes 7.9% of W and 17.4% of Mo, and a total amount of W and Mo (W + Mo) is 25.3%. Also, since the amount of Fe is 43.0%, a ratio of the total amount of W and Mo to Fe ((W + Mo) / Fe) in the concentrated phase is 0.59.

**[Table 8]**

| (mass%) | | | | | | |
|---|---|---|---|---|---|---|
| | c | Cr | W | Mo | V | Fe |
| Fe-BCC phase | 5.1 | 4.9 | 3.3 | 4.7 | 2.5 | 79.6 |
| W-Mo-concentrated phase | 11.5 | 3.0 | 7.9 | 17.4 | 17.2 | 43.0 |
| Carbide | 11.6 | 4.3 | 8.6 | 15.7 | 34.3 | 25.5 |

Also, the Fe-BCC phase mainly includes Fe and also includes Cr, W, Mo, V, Co, C, and so on within predetermined ranges. Electron diffraction patterns generated at the time of emitting electron beams to the surface of the product samples are measured by using EBSD, which can show that the Fe-BCC phase is in a BCC structure.

On the other hand, Table 9 shows composition of each phase of the press-forged material F01. Similarly to the case of the product F11 with no heat treatment, in FIG. 5E, the Fe-BCC phase is analyzed at a section A, the W-Mo-concentrated phase is analyzed at a section B, and carbide is analyzed at a section C. Also, as shown in Table 9, the W-Mo-concentrated phase (the section B) of the press-forged material F01 includes 6.3% of W and 10.6% of Mo, and a total amount of W and Mo (W + Mo) is 16.9%. Also, since the amount of Fe is 48.1%, a ratio of the total amount of W and Mo to Fe ((W + Mo) / Fe) in the concentrated phase is 0.35.

**[Table 9]**

| (mass%) | | | | | | |
|---|---|---|---|---|---|---|
| | c | Cr | W | Mo | V | Fe |
| Fe-BCC phase | 4.4 | 5.4 | 3.0 | 5.2 | 1.4 | 80.6 |
| W-Mo-concentrated phase | 11.2 | 5.0 | 6.3 | 10.6 | 18.8 | 48.1 |
| Carbide | 14.4 | 4.9 | 8.2 | 13.2 | 29.1 | 30.2 |

Although it is shown that the Fe-BCC phase has approximately the same composition as that of the working example products, the composition of the W-Mo-concentrated phase of the press-forged material F01 is different from that of the products F11. In more detail, the W-Mo-concentrated phase of the press-forged material F01 includes more Fe and less W and Mo than the products F11.

Thus, the W-Mo-concentrated phase of the press-forged material F01 is harder than, for example, the W-Mo-concentrated phase of the product F11 with no heat treatment. In the press-forged material F01, from FIG. 5E, the hard W-Mo-concentrated phases are distributed uniformly with the Fe-BCC phases. Thus, when a face thereof is slid, the face wears out not partly into dimple shapes but evenly, and this can result in an oil film shortage of the slid face, which is likely to result in adhesive wear.

Next, the average crystal grain diameter of the Fe-BCC phase is evaluated. The average crystal grain diameter of the Fe-BCC phase for each of F11 - F14 and the press-forged material F01 is calculated by using the above method. The results are shown in Table 10. As shown in Table 10, the average crystal grain diameter of the Fe-BCC phase is 5.34 µm for the product F11 with no heat treatment, 5.18 µm for the product F12 with the tempering treatment, 5.05 µm for the product F13, and 4.84 µm for the product F14. Also, the average crystal grain diameter of the Fe-BCC phase is 4.62 µm for the press-forged material F01. Also, a ratio of the deposited carbide in F12 - F14 is 0.6% or more and 2.4% or less. Also, a ratio of the Fe-BCC phase in F11 - F14 is 45.0% or more, and a ratio of the deposited carbide deposited in the Fe-BCC phase is 0.5% ore more.

**[Table 10]**

| No. | Fe-BCC phase Ratio (%) | Average Crystal Grain Diameter of Fe-BCC phase (µm) | Deposited Carbide Ratio (%) | Circle Equivalent Average Grain Diameter of Deposited Carbide (µm) |
|---|---|---|---|---|
| F11 | 45.4 | 5.34 | 0.11 | 1.12 |
| F12 | 45.3 | 5.18 | 1.45 | 1.35 |
| F13 | 45.1 | 5.05 | 2.36 | 1.22 |
| F14 | 45.1 | 4.84 | 0.66 | 1.10 |
| F01 | 44.8 | 4.62 | 1.95 | 1.16 |

In general, as a method for improving mechanical properties, a structure is to be micronized and homogenized. A press-forged material is obtained by sintering powders followed by press forging and heat treatment so as to avoid weight segregation and to obtain a uniform structure. According to such the method, as above, it is possible to obtain a structure in which the Fe-BCC phase is relatively small and the W-Mo-concentrated phase and the Fe-BCC phase are uniformly dispersed in a microscopic way.

In the present embodiment on the other hand, the W-Mo-concentrated phase is formed continuously in substantial ring shapes (a lamellar structure), or the W-Mo-concentrated phase is divided but yet arranged in substantial ring shapes. Thus, a structure in which the W-Mo-concentrated phase surrounds the Fe-BCC phase can be obtained. In this way, the structure is microscopically heterogeneous (the structure has a distribution of W-Mo-concentrated phase and Fe-BCC phase that are not completely mixed with each other). However, when such the structure happens to be a slid face, the relatively softer Fe-BCC phase wears down primarily before the relatively harder W-Mo-concentrated phase, and the Fe-BCC phase surrounded by the W-Mo-concentrated phase wears out into dimple shapes having a circle equivalent diameter of 4.8 µm or more. Thus, the dimple-shaped parts hold oil, and this can improve wear resistance. In addition, such the dimple-shaped parts are formed dispersedly, thereby preventing occurrence of adhesive wear.

The press-forged material F01, on the other hand, has high hardness as a whole. However, the W-Mo-concentrated phase and the Fe-BCC phase are dispersed and thus wearing progresses substantially uniformly and simultaneously as a whole. Thus, dimples or the like many not occur, which may lead to an oil film shortage and adhesion. As above, according to the present embodiment, adhesion and the like can be prevented efficiently.

### [Hardness]

Hardness of the obtained Fe-based alloy products is measured by using a Vickers hardness measuring device. Conditions for the measurement are: an indentation load for a Vickers indenter is 0.5 kg, a retention time for indentation is 10 seconds, and the hardness is found from a length of a diagonal of an impression formed on the measuring surface due to indentation of the indenter. The number of measurement points is 5 and an average value thereof is calculated. Table 11 shows the results.

**[Table 11]**

| No. | Quenching | Tempering | Hardness (HV) |
|---|---|---|---|
| F11 | - | - | 360 |
| F12 | - | Done | 837 |
| F13 | Done | - | 804 |
| F14 | Done | Done | 748 |
| F01 | Done | Done | 907 |

It is found that the product F11, which is left as is without the heat treatments after being molded, has hardness of 360 HV, the product F12 with only the tempering treatment after molding has hardness of 837 HV, the product F13 with the quenching treatment after molding has hardness of 804 HV, and the product F14 with the quenching and tempering treatments after molding has hardness of 748 HV.

As mentioned above, the product F11, which is left as is without the heat treatments after being molded, and the product F12, which is treated with only the tempering treatment after molding, have the mesh-like lamellar structures formed. Also, as shown in FIG. 5C and FIG. 5D, in the product F13 with the quenching treatment after molding and the product F14 with the quenching and tempering treatments after molding, the ring-shaped depositions 54 including Mo and W exist, and thus the Fe-BCC phase and the depositions 54 are unevenly distributed. As a result, hard parts and relatively softer parts exist together in the structure, and thus high toughness can also be expected as in the products F1 and F2.

Although the products including Co are evaluated in the working examples above, Co is not always necessary. Inclusion of Co of a predetermined amount can provide high mechanical properties without heat treatments. However, in cases in which Co is not included, sufficient mechanical properties can be obtained by performing heat treatments such as quenching.

### DESCRIPTION OF NOTATIONS

- 1: additive manufacturing device
- 3: powder delivery nozzle
- 5: focusing lens
- 7: protector lens
- 9: laser beam
- 11: alloy powder
- 13: molten pool
- 15: product
- 17: base plate
- 50: lamellar structure
- 52: Fe-BCC phase
- 54: deposition
- 56: minute deposition

## Claims

1. An Fe-based alloy comprising:
an alloy structure comprising:
C, Cr, W, Mo, and V, with the remainder made up of Fe and unavoidable impurities;
an Fe-BCC phase; and
a W-Mo-concentrated phase, wherein
the W-Mo-concentrated phase is formed continuously in substantial ring shapes, or the W-Mo-concentrated phase is divided but arranged in substantial ring shapes, and
a circle equivalent diameter of the W-Mo-concentrated phase is between 5 µm and 20 µm,
wherein the circle equivalent diameter is measured as disclosed in the specification,
the Fe-BCC phase includes, by mass, 3% or more and 7% or less of C, 2% or more and 6% or less of Cr, 0.5% or more and 8% or less of W, 3% or more and 8% or less of Mo, 2% or more and 20% or less of V, and 60% or more and 90% or less of Fe;
the W-Mo-concentrated phase includes, by mass, 5% or more and 13% or less of C, 2% or more and 12% or less of Cr, 7% or more and 17% or less of W, 11% or more and 22% or less of Mo, 3% or more and 19% or less of V, and 40% or more and 50% or less of Fe; and
the W-Mo-concentrated phase is formed so as to surround the Fe-BCC phase, wherein the Fe-BCC phase has an average crystal grain diameter of 3 µm to 8 µm, wherein the average crystal grain diameter is calculated as disclosed in the specification,
wherein
the Fe-based alloy as a whole comprises, by mass:
0.3% or more and 2.8% or less of C;
3.0% or more and 10.0% or less of Cr;
1.5% or more and 10.5% or less of W;
2.0% or more and 9.0% or less of Mo;
1.0% or more and 8.0% or less of V; and
the remainder made up of Fe and unavoidable impurities**,** where in particular the unavoidable impurities P, S, O and N are restricted to 0.03% or less of P, 0.003% or less of S, 0.02% or less of O, and 0.05% or less of N, and
wherein the Fe-based alloy further comprises:
either one of or both of Si and Mn, wherein
the Fe-based alloy as a whole includes, by mass, 1.0% or less of Si, 0.1% or more and 1.0% or less of Mn, and 10.5% or less of Co, and
the Fe-BCC phase includes 9% or more and 13% or less of Co; and
the W-Mo-concentrated phase includes 6% or more and 11% or less of Co
wherein the alloy structure is evaluated by using an energy-dispersive X-ray spectroscopy (EDS) and an electron back scattering diffraction (EBSD) that are attached to a scanning electron microscope (SEM) as disclosed in the specification.

2. An alloy member comprising:
at least partly the Fe-based alloy according to claim 1.

3. The alloy member according to claim 2, wherein
the Fe-based alloy is formed on a surface of a base material of the alloy member;
a thickness of a top layer from an interface between the base material and the Fe-based alloy to a surface of the Fe-based alloy is between 0.1 mm and 2 mm;
hardness of the top layer is 700 HV or more; and
wherein the hardness is measured as disclosed in the specification.

4. The alloy member according to claim 2, wherein
the alloy member includes any one of a nitride layer, a compound layer, and a ceramic coating layer on the surface of the Fe-based alloy.

5. A product comprising:
at least partly the alloy member according to claim 2.

6. The product according to claim 5, wherein
the product is either a hot stamping die, a cold forging die, or a cold pressing die.

7. A method for manufacturing an alloy member, the method comprising:
using alloy powder comprising, by mass:
0.3% or more and 2.8% or less of C;
3.0% or more and 10.0% or less of Cr;
1.5% or more and 10.5% or less of W;
2.0% or more and 9.0% or less of Mo;
1.0% or more and 8.0% or less of V;
10.5% or less of Co;
either one of or both of Si and Mn, wherein the alloy powder includes
1.0% or less of Si; and
0.1% or more and 1.0% or less of Mn;
the remainder made up of Fe and unavoidable impurities, where in particular the unavoidable impurities P, S, O and N are restricted to 0.03% or less of P, 0.003% or less of S, 0.02% or less of O, and 0.05% or less of N;
forming a solidified layer by melting and solidifying the alloy powder according to a directed energy deposition method by applying a laser beam with a laser power of 1500 - 2500W, an energy density of 90-300 J/mm, a scanning speed of 500-1000 mm/min, a laser beam diameter of 3 mm, and an amount of powder feed of 10-20 g/min onto the alloy powder;
forming another solidified layer onto the solidified layer; and
repeating the above steps to obtain the alloy member having a layered structure.

8. The method for manufacturing the alloy member according to claim 7, the method further comprising:
a surface treatment step for performing a surface treatment on the obtained alloy member,
wherein
the surface treatment step is either a film formation using a nitride treatment or a PVD method.

## Patentansprüche

1. Legierung auf Fe-Basis, umfassend:
eine Legierungsstruktur, umfassend:
C, Cr, W, Mo und V, wobei der Rest aus Fe und unvermeidbaren Verunreinigungen besteht;
eine Fe-BCC-Phase; und
eine W-Mo-konzentrierte Phase, wobei
die W-Mo-konzentrierte Phase kontinuierlich in wesentlichen Ringformen gebildet ist oder die W-Mo-konzentrierte Phase geteilt, aber in wesentlichen Ringformen angeordnet ist, und
ein kreisäquivalenter Durchmesser der W-Mo-konzentrierten Phase zwischen 5 µm und 20 µm liegt, wobei der kreisäquivalente Durchmesser wie in der Beschreibung offenbart gemessen wird,
die Fe-BCC-Phase, bezogen auf die Masse, 3 % oder mehr und 7 % oder weniger C, 2 % oder mehr und 6 % oder weniger Cr, 0,5 % oder mehr und 8 % oder weniger W, 3 % oder mehr und 8 % oder weniger Mo, 2 % oder mehr und 20 % oder weniger V und 60 % oder mehr und 90 % oder weniger Fe enthält;
die W-Mo-konzentrierte Phase, bezogen auf die Masse, 5 % oder mehr und 13 % oder weniger C, 2 % oder mehr und 12 % oder weniger Cr, 7 % oder mehr und 17 % oder weniger W, 11 % oder mehr und 22 % oder weniger Mo, 3 % oder mehr und 19 % oder weniger V und 40 % oder mehr und 50 % oder weniger Fe enthält; und
die W-Mo-konzentrierte Phase so gebildet ist, dass sie die Fe-BCC-Phase umgibt, wobei die Fe-BCC-Phase einen durchschnittlichen Kristallkorndurchmesser von 3 µm bis 8 µm aufweist, wobei der durchschnittliche Kristallkorndurchmesser wie in der Beschreibung offenbart berechnet wird,
wobei
die Legierung auf Fe-Basis insgesamt, bezogen auf die Masse, umfasst:
0,3 % oder mehr und 2,8 % oder weniger C;
3,0 % oder mehr und 10,0 % oder weniger Cr;
1,5 % oder mehr und 10,5 % oder weniger W;
2,0 % oder mehr und 9,0 % oder weniger Mo;
1,0 % oder mehr und 8,0 % oder weniger V; und
wobei der Rest aus Fe und unvermeidbaren Verunreinigungen besteht, wobei insbesondere die unvermeidbaren Verunreinigungen P, S, O und N auf 0,03 % oder weniger P, 0,003 % oder
weniger S, 0,02 % oder weniger O und 0,05 % oder weniger N beschränkt sind, und
wobei die Legierung auf Fe-Basis ferner umfasst:
entweder eines oder beide von Si und Mn, wobei
die Legierung auf Fe-Basis insgesamt, bezogen auf die Masse, 1,0 % oder weniger Si, 0,1 % oder mehr und 1,0 % oder weniger Mn und 10,5 % oder weniger Co umfasst, und
die Fe-BCC-Phase 9 % oder mehr und 13 % oder weniger Co umfasst; und
die W-Mo-konzentrierte Phase 6 % oder mehr und 11 % oder weniger Co umfasst,
wobei die Legierungsstruktur unter Verwendung einer energiedispersiven Röntgenspektroskopie (EDS) und einer Elektronenrückstreubeugung (EBSD), die an einem Rasterelektronenmikroskop (SEM) angebracht sind, wie in der Beschreibung offenbart, bewertet wird.

2. Legierungselement, umfassend:
zumindest teilweise die Legierung auf Fe-Basis nach Anspruch 1.

3. Legierungselement nach Anspruch 2, wobei
die Legierung auf Fe-Basis auf einer Oberfläche eines Basismaterials des Legierungselements gebildet ist;
eine Dicke einer oberen Schicht von einer Grenzfläche zwischen dem Basismaterial und der Legierung auf Fe-Basis zu einer Oberfläche der Legierung auf Fe-Basis zwischen 0,1 mm und 2 mm beträgt;
die Härte der oberen Schicht 700 HV oder mehr beträgt; und
wobei die Härte wie in der Beschreibung offenbart gemessen wird.

4. Legierungselement nach Anspruch 2, wobei
das Legierungselement eines von einer Nitridschicht, einer Verbindungsschicht und einer Keramikbeschichtungsschicht auf der Oberfläche der Legierung auf Fe-Basis beinhaltet.

5. Produkt, umfassend:
zumindest teilweise das Legierungselement nach Anspruch 2.

6. Produkt nach Anspruch 5, wobei
das Produkt entweder ein Heißprägewerkzeug, ein Kaltschmiedewerkzeug oder ein Kaltpresswerkzeug ist.

7. Verfahren zur Herstellung eines Legierungselements, wobei das Verfahren umfasst:
Verwenden von Legierungspulver, umfassend, bezogen auf die Masse:
0,3 % oder mehr und 2,8 % oder weniger C;
3,0 % oder mehr und 10,0 % oder weniger Cr;
1,5 % oder mehr und 10,5 % oder weniger W;
2,0 % oder mehr und 9,0 % oder weniger Mo;
1,0 % oder mehr und 8,0 % oder weniger V;
10,5 % oder weniger Co;
entweder enes oder beide von Si und Mn, wobei das Legierungspulver 1,0 % oder weniger Si;
und
0,1 % oder mehr und 1,0 % oder weniger Mn einschließt;
wobei der Rest aus Fe und unvermeidbaren Verunreinigungen besteht, wobei insbesondere die unvermeidbaren Verunreinigungen P, S, O und N auf 0,03 % oder weniger P, 0,003 % oder weniger S, 0,02 % oder weniger O und 0,05 % oder weniger N beschränkt sind;
Bilden einer verfestigten Schicht durch Schmelzen und Verfestigen des Legierungspulvers gemäß einem gerichteten Energieabscheidungsverfahren durch Anwenden eines Laserstrahls mit einer Laserleistung von 1500 - 2500 W, einer Energiedichte von 90 - 300 J/mm, einer Abtastgeschwindigkeit von 500 - 1000 mm/min, einem Laserstrahldurchmesser von 3 mm und einer Pulverzufuhrmenge von 10 - 20 g/min auf das Legierungspulver;
Bilden einer weiteren verfestigten Schicht auf der verfestigten Schicht; und
Wiederholen der obigen Schritte, um das Legierungselement mit einer geschichteten Struktur zu erhalten.

8. Verfahren zur Herstellung des Legierungselements nach Anspruch 7, wobei das Verfahren ferner umfasst:
einen Oberflächenbehandlungsschritt zum Durchführen einer Oberflächenbehandlung an dem erhaltenen Legierungselement, wobei
der Oberflächenbehandlungsschritt entweder eine Filmbildung unter Verwendung einer Nitridbehandlung oder eines PVD-Verfahrens ist.

## Revendications

1. Alliage à base de fer comprenant :
une structure d'alliage comprenant :
du C, Cr, W, Mo et V, avec le reste étant constitué de fer et d'impuretés inévitables ;
une phase Fe-BCC ; et
une phase enrichie en W-Mo, dans lequel
la phase enrichie en W-Mo est formée continuellement en des formes sensiblement en anneau, ou la phase enrichie en W-Mo est divisée mais arrangée en des formes sensiblement en anneau, et
un diamètre de cercle équivalent de la phase enrichie en W-Mo est d'entre 5 µm et 20 µm,
dans lequel le diamètre de cercle équivalent est mesuré comme il est divulgué dans la description,
la phase Fe-BCC comprend, en masse, 3 % ou plus et 7 % ou moins de C, 2 % ou plus et 6 % ou moins de Cr, 0,5 % ou plus et 8 % ou moins de W, 3 % ou plus et 8 % ou moins de Mo, 2 % ou plus et 20 % ou moins de V et 60 % ou plus et 90 % ou moins de Fe ;
la phase enrichie en W-Mo comprend, en masse, 5 % ou plus et 13 % ou moins de C, 2 % ou plus et 12 % ou moins de Cr, 7 % ou plus et 17 % ou moins de W, 11 % ou plus et 22 % ou moins de Mo, 3 % ou plus et 19 % ou moins de V et 40 % ou plus et 50 % ou moins de Fe ; et
la phase enrichie en W-Mo est formée de manière à entourer la phase Fe-BCC,
dans lequel la phase Fe-BCC a un diamètre moyen de grains cristallins de 3 µm à 8 µm, dans lequel le diamètre moyen de grains cristallins est calculé comme il est divulgué dans la description,
dans lequel
l'alliage à base de fer dans son ensemble comprend, en masse :
0,3 % ou plus et 2,8 % ou moins de C ;
3,0 % ou plus et 10,0 % ou moins de Cr ;
1,5 % ou plus et 10,5 % ou moins de W ;
2,0 % ou plus et 9,0 % ou moins de Mo ;
1,0 % ou plus et 8,0 % ou moins de V ; et
le reste étant constitué de fer et d'impuretés inévitables, où en particulier les impuretés inévitables de P, S, O et N sont limitées à 0,03 % ou moins de P, 0,003 % ou moins de S, 0,02 % ou moins de O et 0,05 % ou moins de N, et
où l'alliage à base de fer comprend en outre :
soit l'un ou les deux de Si et Mn, dans lequel
l'alliage à base de fer dans son ensemble comprend, en masse, 1,0 % ou moins de Si, 0,1 % ou plus et 1,0 % ou moins de Mn et 10,5 % ou moins de Co, et
la phase Fe-BCC comprend 9 % ou plus et 13 % ou moins de Co ; et
la phase enrichie en W-Mo comprend 6 % ou plus et 11 % ou moins de Co,
dans lequel la structure d'alliage est évaluée en utilisant une spectroscopie aux rayons X à dispersion d'énergie (EDS) et une diffraction d'électrons rétrodiffusés (EBSD) qui sont attachées à un microscope électronique à balayage (MEB) comme il est divulgué dans la description.

2. Elément en alliage comprenant :
au moins partiellement l'alliage à base de fer selon la revendication 1.

3. Elément en alliage selon la revendication 2, dans lequel
l'alliage à base de fer est formé sur une surface d'un matériau de base de l'élément en alliage ;
une épaisseur d'une couche supérieure d'une interface entre le matériau de base et l'alliage à base de fer jusqu'à une surface de l'alliage à base de fer est d'entre 0,1 mm et 2 mm ;
la dureté de la couche supérieure est de 700 HV ou plus ; et
dans lequel la dureté est mesurée comme il est divulgué dans la description.

4. Elément en alliage selon la revendication 2, où
l'élément en alliage comprend l'une quelconque d'entre une couche de nitrure, une couche de composé et une couche de revêtement céramique sur la surface de l'alliage à base de fer.

5. Produit comprenant :
au moins partiellement l'élément en alliage selon la revendication 2.

6. Produit selon la revendication 5, dans lequel
le produit est soit une matrice d'emboutissage à chaud, une matrice de forgeage à froid ou une matrice d'emboutissage à froid.

7. Procédé de fabrication d'un élément en alliage, le procédé comprenant :
utiliser une poudre d'alliage comprenant, en masse :
0,3 % ou plus et 2,8 % ou moins de C ;
3,0 % ou plus et 10,0 % ou moins de Cr ;
1,5 % ou plus et 10,5 % ou moins de W ;
2,0 % ou plus et 9,0 % ou moins de Mo ;
1,0 % ou plus et 8,0 % ou moins de V ;
10,5 % ou moins de Co ;
soit l'un soit les deux de Si et Mn, dans lequel la poudre d'alliage comprend :
1,0 % ou moins de Si ; et
0,1 % ou plus et 1,0 % ou moins de Mn ;
le reste étant constitué de fer et d'impuretés inévitables, où en particulier les impuretés inévitables de P, S, O et N sont limitées à 0,03 % ou moins de P, 0,003 % ou moins de S, 0,02 % ou moins de O et 0,05 % ou moins de N ;
former une couche solidifiée en fondant et solidifiant la poudre d'alliage selon un procédé de dépôt sous énergie dirigée en appliquant un faisceau laser ayant une puissance laser de 1500 - 2500 W, une densité énergétique de 90 - 300 J/mm, une vitesse de balayage de 500 - 1000 mm/min, un diamètre de faisceau laser de 3 mm et une quantité d'alimentation en poudre de 10 - 20 g/min sur la poudre d'alliage ;
former une autre couche solidifiée sur la couche solidifiée ; et
répéter les étapes ci-dessus pour obtenir un élément en alliage ayant une structure stratifiée.

8. Procédé de fabrication de l'élément en alliage selon la revendication 7, le procédé comprenant en outre :
une étape de traitement de surface pour effectuer un traitement de surface sur l'élément en alliage obtenu, dans lequel
l'étape de traitement de surface est soit la formation d'un film par un traitement de nitruration soit un procédé PVD.
